# DEMANDE DE BREVET EUROPEEN

(11) **EP 0 526 378 A1**
(43) Date de publication de la demande: **03.02.1993**
(21) Numéro de dépôt: 92500069.7
(22) Date de dépôt: 10.06.1992
(51) Int. Cl.: B23K 37/04

(54) **Dispositif de soudage de grilles d'assemblage de combustible nucléaire**

(30) Priorité: 26.06.1991 ES 9101509
(71) Demandeur: EQUIPOS NUCLEARES, S.A., E-39600 Maliano (Cantabria) (ES)
(72) Inventeur: Diez Aja, Juan Antonio, ES-39005 Santander (ES)
(74) Mandataire: Urizar Anasagasti, Jesus Maria

(57) **Abrégé**

Machine à souder les cellules dont on se sert pour le logement du combustible dans les piscines des centrales nucléaires, lesquelles cellules sont construites en assemblant par soudure les quatre angles d'un carré constitué par quatre tôles d'acier adéquatement accouplées en position verticale et soudées à l'unisson, tout en réalisant celles-ci un mouvement ascendant continuel à vitesse contrôlée.

## Description

La présente invention porte sur une nouvelle machine permettant la construction de cellules du type de celles employées pour le logement du combustible dans les piscines des centrales nucléaires. Cette sorte de cellules est essentiellement constituée par la conjonction de quatre tôles d'acier, assemblées par leurs angles, ce qui forme un prisme quadrangulaire dégagé de ses bases, celles-là étant capables d'héberger dans leur intérieur des plaquettes similaires quant à leur configuration, même radioactives, pour s'empiler à leur tour convenablement et former ainsi une unité plus grande, laquelle est aussi adéquatement soudée et scellée.

Pour construire une cellule ayant ces caractéristiques, il faut effectuer quatre soudures tout au long de ces tôles (5 mètres environ); et pendant que l'on procède à la réalisation de chacune de ces soudures, il faut positionner et immobiliser adéquatement les respectives tôles entre elles. Le procédé que l'on applique, jusqu'à présent, prévoit la réalisation de deux unités initiales sous forme de "L", reliant entre eux deux groupes de deux tôles pour positionner, enfin, deux "L" venant l'un en face de l'autre et procéder ensuite à la réalisation d'un nouveau soudage, en ce cas, double, pour conformer finalement le paralélépipède voulu.

La réalisation séparément des divers assemblages est généralement à l'origine d'un bombement des tôles et, par conséquent, d'un prisme dont les arêtes et les faces sont gauchies, cela pouvant déclencher des problèmes de dimensionnement et de réintroduction du combustible dans leur intérieur, outre les problèmes ultérieurs lors de l'emplilement et assemblage d'une série de cellules entre elles.

La machine de la présente invention utilise un système ou série de phases d'action pour la formation et la construction d'une cellule tout à fait différents des conventionnels, car, tout d'abord, elle compte sur les quatre tôles séparées formant un prisme quadrangulaire, parfaitement droit, procédant au soudage simultané des quatre arêtes, tout en déplaçant l'ensemble de la cellule pour obtenir, enfin, dans un seul processus de soudure, une unité de cellule parfaitement droite et au moyen d'une durée de fabrication sensiblement plus petite.

Certes, compte tenu que le procédé conventionnel exige au moins trois ou quatre phases de soudage, chacune d'elles comportant le déplacement d'une ou deux buses tout au long de quelques 5 ms, ainsi qu'une série de phases de formation des "L" initiaux et l'ultérieur assemblage de ceux-ci; par rapport au procédé suivi par cette machine, où la phase de soudage est unique, étant donné que les quatre angles sont soudés en même temps, et que la phase de montage des tôles en position initiale est encore plus simple que les précédentes, nous pouvons en arriver à la conclusion que le temps approximatif de réalisation d'une cellule ayant ces caractéristiques est au moins de 1/4 du précédent, obtenant, d'ailleurs, des jeux plus petits et une réalisation finale sensiblement optimisée.

On peut comprendre plus aisément l'objet de la présente invention à l'aide de la description suivante, réalisée à partir d'un exemple pratique de réalisation d'une machine à souder les cellules telle que celle que nous recommendons ici; cette description est réalisée à l'aide du dessin en annexe, dans lequel:

La figure 1 représente, moyennant une vue en élévation, un schéma de machine à souder, en ce qui concerne un dispositif de support, guidage et centrage des tôles destinées à conformer la cellule en question, ainsi que les moyens de déplacement de l'ensemble des tôles de soudage.

La figure 2 correspond à une coupe en plan de la figure précédente.

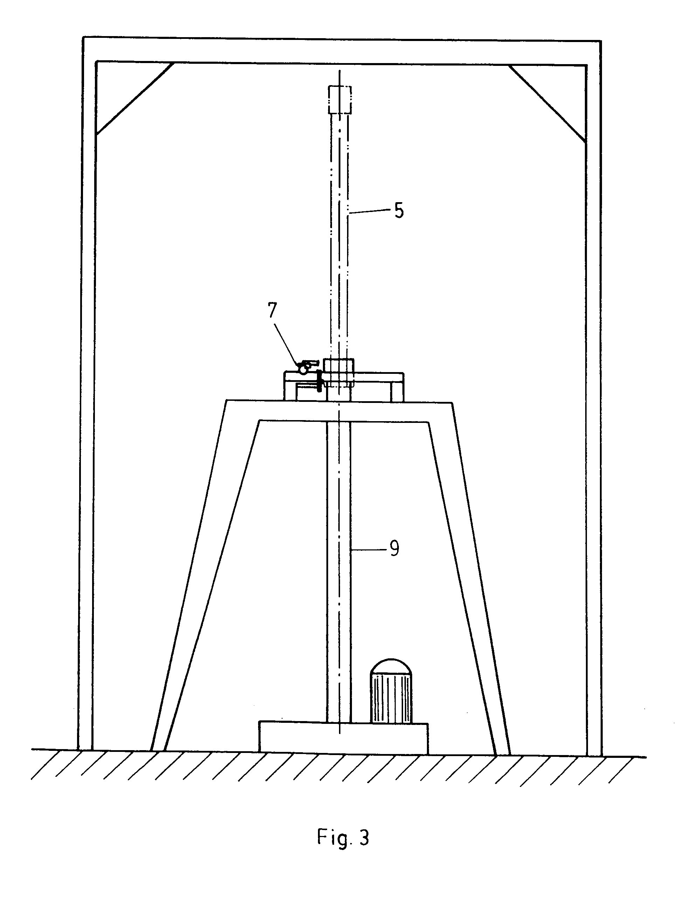

Dernièrement, la figure 3 montre globalement l'ensemble de la machine à souder en élévation.

Il s'agit de construire des cellules constituées par quatre tôles d'acier (1), assemblées par le soudage de leurs quatre angles pour former un prisme quadrangulaire ouvert par ses bases, ces cellules servant à loger du combustible dans des piscines des centrales nucléaires. Selon la présente invention, cette machine à souder est intégrée par:
a) Des moyens de support, guidage et centrage des tôles qui se trouvent sans ajuster, placées en position verticale, formant un prisme quadrangulaire.
b) des moyens d'assemblage de ces tôles et de déplacement vertical de celles-ci; et
c) Extérieurement au prisme constitué, par une plateforme support de certains moyens de soudage orientés vers les quatre angles, lesquels, en s'activant par l'énergie, assemblent les tôles respectives tout en s'élevant celles-ci à vitesse contrôlée.

Ainsi donc, la machine requiert, tout d'abord, des éléments capables de monter les tôles (1) qui se trouvent sans ajuster en position verticale et de les maintenir dans une position telle qu'elles occupent un prisme quadrangulaire inamovible, même si, au début, ces tôles se trouvent séparées entre elles; pour cela faire, il faut placer des rouleaux extérieurs (2) et intérieurs (4) de centrage, adéquatement disposés et permettant, d'ailleurs, le déplacement ascendant des tôles sans perte de position, pour respecter ainsi les caractéristiques dimensionnelles de base requises par l'ensemble de la cellule. Chacun de ces jeux de rouleaux, intérieurs (2) et extérieurs (4) est double, et ils doivent être placés sur leur correspondant corps-support, dont nous n'avons représenté que l'intérieur, sous la référence (3). Ces rouleaux de centrage présentent des profils concaves et convexes octogonaux permettant leur adaptation respectivement du côté de la face extérieure et intérieure de chacun des angles, laissant également le jeu nécessaire pour permettre le chevauchement exigé par le soudage.

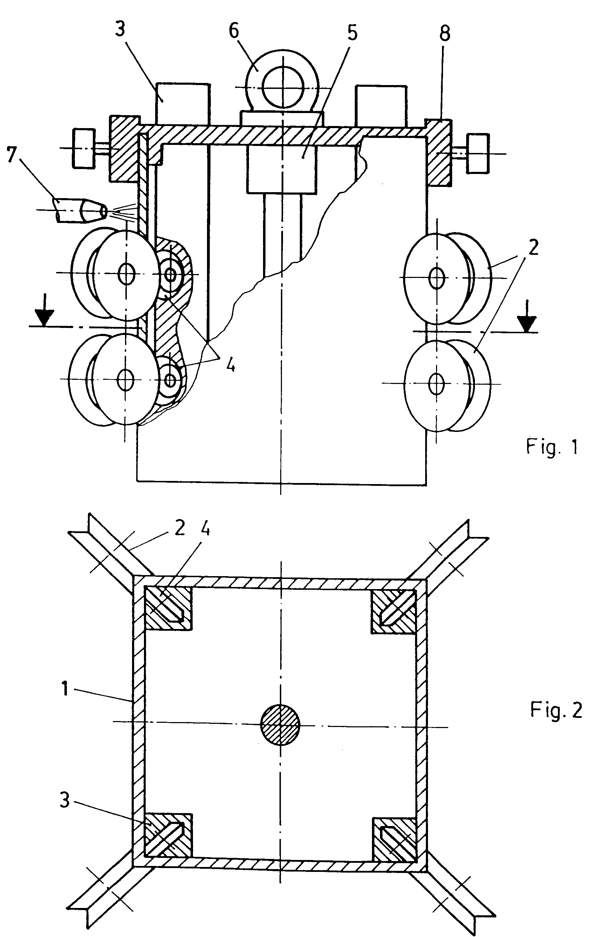

Les rouleaux extérieurs (2) sont placés sur un corps-support rétractile, commandé par des moyens pneumatiques permettant l'ouverture de l'ensemble pour faciliter le montage des tôles, et, aussitôt que le dispositif correspondant a été déclenché, le nouveau montage et auto-assemblage des quatre tôles entre elles, jusqu'à l'adoption de la position requise, tel qu'il est représenté dans les figures 1 et 2.

De leur côté, les rouleaux de centrage (4) sont montés sur un corps-support (3) consistant en une grande masse en cuivre dont le rôle de base consiste à supporter les rouleaux tout en dissipant la chaleur dégagée de l'opération de soudage; il sert, donc, à supporter la racine de cette soudure et à fournir le gaz de soutien nécessaire.

Dans la figure 1, on peut remarquer plus nettement ces éléments de guidage et centrage des respectives tôles (1), ainsi qu'une série de griffes ou moyens mécaniques d'assemblage (8) placés supérieurement, après que les tôles ont été mises en place, lesquels permettent l'immobilisation de celles-ci, tout en facilitant, d'ailleurs, le déplacement vertical de l'ensemble de celles-là, soit par l'impulsion d'un piston (5) placé dans l'intérieur, soit moyennant un palan (6).

Le mouvement ascendant est déclenché par un piston (5) pourvu de sa correspondante tête d'impulsion, laquelle se déplace verticalament dans l'intérieur d'une autre tête fixée (9), ancrée à la terre, et dans la partie supérieure de laquelle se trouvent positionnés les cuivres (3) contenant les centreurs intérieurs (4).

La machine est dessinée et construite pour réaliser tout le cycle de soudage automatiquement et d'une seule passe. Une fois que les tôles ont été chargées et les rouleaux extérieus accouplées, les têtes de soudage sont rapprochées (7), commençant ainsi l'arc pilote aux quatre machines à souder; lorsque cela a lieu, le mouvement ascendant est initié, lequel est solidaire des quatre tôles, le soudage se poursuivant jusqu'à l'achèvement de la cellule complète. Evidemment, la vitesse et les paramètres du soudage peuvent être réglés à volonté, ainsi que l'emplacement des pistolets (7) qui sont placées dans des dispositifs permettant leur orientatin adéquate, s'adressant toujours vers l'angle voulu.

A la fin du soudage d'une cellule, celle-ci reste accrochée à un palan par le crochet (6), le piston d'inpulsion (5) descendant alors jusqu'à sa position initiale, moment où la cellule peut être déplacée horizontalement et descendue jusqu'à l'obtention d'une position de stockage. Ce moment arrivé, le cycle peut être recommencé pour une autre nouvelle cellule, dont la première phase prévoit le montage des tôles en position verticale et le repliage des centreurs extérieurs contraignant les quatre tôles à adopter la position prismatique représentée dans la figure 1.

Evidemment, cette machine et cette forme de procéder peuvent s'adapter à toute autre sorte d'éléments ayant besoin de souder une série de tôles ou d'éléments similaires pour former un ensemble prismatique, de toute configuration et longueur, même s'il est évident que son application essentielle vise le soudage des cellules pour le logement du combustible dans des piscines pour des centrales nucléaires.

La nature de cette invention ayant été suffisamment décrite, ainsi que la forme de sa mise en application, il ne nous reste à ajouter que le fait qu'il est possible de réaliser, dans son ensemble et les parties qui le composent, des changements quant à la forme, matériaux et disposition, pour autant que ces modifications ne bouleversent pas substantiellement les caractéristiques de l'invention, lesquelles sont revendiquées à la suite:

## Revendications

**1.-** Machine à souder les cellules du type de celles qui sont employées pour le logement des combustibles dans des piscines des centrales nucléaires, et lesquelles sont construites en assemblant par soudage les quatre angles d'un carré formé par des tôles d'acier, caractérisée en ce qu'elle comporte: a) des moyens de support, guidage et centrage des tôles qui ne sont pas ajustées en position verticale, formant un prisme quadrangulaire; b) des moyens de serrage et de déplacement vertical de ces tôles; c) et, extérieurement au prisme formé, une plateforme-support de certains moyens de soudage placés sur des mécanismes permettant leur orientation vers les quatre angles des tôles, lesquels, en s'activant par l'énergie, assemblent les angles respectifs, en mème temps que les tôles s'élèvent à vitesse contrôlée.

**2.-** Machine, selon les revendications précédentes, caractérisée en ce que lesdits moyens de support guide des tôles sont constitués par des rouleaux centreurs, placés à chaque angle dedans et dehors de ceux-ci, avec des profils convexes et concaves respectivement pour s'adapter aux angles, montés sur des supports, dont les extérieurs au moins disposent d'un mécanisme par commande pneumatique, lequel les fait reculer pour permettre le chargement des tôles, ceux-là se remettant en position verticale avant le commencement du processus de soudage.

**3.-** Machine, selon les revendications précédentes, caractérisée en ce que lesdits supports des rouleaux centreurs, au moins ceux situés intérieurement, sont constitués par de grandes pièces en cuivre pour dissiper la chaleur de l'opération de soudage, servant en même temps comme suport de la racine de cette machine, tout en apportant à celle-ci le gaz nécessaire de soutien.

**4.-** Machine, selon les revendications précédentes, caractérisée en ce que les moyens de déplacement vertical des tôles sont constitués par un piston vertical d'impulsion, lequel piston agit sur les griffes et moyens mécaniques de serrage entre les tôles, et se déplaçant verticalement dans un autre qui se trouve fixé, ancré à la terre, dans la partie supérieure duquel se trouvent les centreurs intérieurs.
